# EUROPEAN PATENT SPECIFICATION

(11) **EP 3 404 976 B1**
(45) Date of publication and mention of the grant of the patent: **08.07.2020**
(21) Application number: 17171037.9
(22) Date of filing: 15.05.2017
(51) Int. Cl.: H04W 72/04

(54) **PROCEDURE FOR MANAGING RADIOELECTRIC RESOURCES IN 5G CELLULAR NETWORKS AIMING AT THE REUSE OF RESOURCES FOR VEHICLE-TO-VEHICLE, V2V, COMMUNICATIONS**
VERFAHREN ZUR VERWALTUNG VON RADIOELEKTRISCHEN RESSOURCEN IN 5G-MOBILFUNKNETZEN ZUR WIEDERVERWENDUNG VON RESSOURCEN FÜR FAHRZEUG ZU FAHRZEUG KOMMUNIKATIONEN
PROCÉDÉ DE GESTION DE RESSOURCES RADIOÉLECTRIQUES DANS DES RÉSEAUX CELLULAIRES 5G VISANT LA RÉUTILISATION DE RESSOURCES POUR DES COMMUNICATIONS ENTRE VÉHICULES

(43) Date of publication of application: 21.11.2018
(73) Proprietor: Universidad de Deusto, 48007 Bilbao (Vizcaya) (ES); Fundacion Deusto, 48007 Bilbao (ES)
(72) Inventor: HERNANDEZ, Unai, 48007 Bilbao (ES); DE LA IGLESIA CARRIL, Idoia, 48007 Bilbao (ES)
(74) Representative: Ezcurra Zufia, Maria Antonia

(56) References cited:
- WO-A1-2015/143170
- WO-A1-2016/034198
- QUANG DUONG ET AL: "Distance-based interference coordination for device-to-device communications in cellular networks", 2013 FIFTH INTERNATIONAL CONFERENCE ON UBIQUITOUS AND FUTURE NETWORKS (ICUFN), IEEE, 2 July 2013 (2013-07-02), pages 776-779, XP032492266, ISSN: 2165-8528, DOI: 10.1109/ICUFN.2013.6614925 [retrieved on 2013-09-27]
- IDOIA DE LA IGLESIA ET AL: "Smart Bandwidth Assignation in an Underlay Cellular Network for Internet of Vehicles", SENSORS, vol. 17, no. 10, 1 October 2017 (2017-10-01), page 2217, XP055417039, CH ISSN: 1424-8220, DOI: 10.3390/s17102217

## Description

### OBJECT OF THE INVENTION

The object of the present invention, as established in the title of the invention, is a procedure for managing radio-electric resources in 5G cellular networks for reuse of these resources in vehicle-to-vehicle (V2V) links, as captured in claim 1.

The procedure that forms the object of the invention enables the management of radio-electric resources for cellular networks in which common cellular users, hereafter referred to as C-UEs, and vehicles, hereafter referred to as V-UEs, co-exist. Both C-UEs and V-UEs have a radio interface through which they transmit and receive messages.

The specific scenario to which this invention applies is that of Vehicular Ad-hoc Networks, also known as VANET networks. Since Release 12 of the 3GPP **(3rd Generation Partnership Project),** cellular networks have offered the possibility of establishing device-to-device (D2D) communications. Using this feature, it is possible to establish direct vehicle-to-vehicle (V2V) communications links, which are necessary in VANET networks in order to deploy Intelligent Transportation Systems, better known as ITSs.

As well as V2V communications, VANET networks also need to establish vehicle-to-infrastructure (V2I) and infrastructure-to-vehicle (I2V) communications in order to be able to deploy the aforementioned ITS systems.

The fact that the same technology offers the possibility of establishing both communications through the infrastructure and D2D communications makes it possible to reuse the same radio-electric resources simultaneously for both types of link. An RB (Resource Block) is a space-time slot that is allocated to a user for it to transmit its information. This invention offers a solution that makes it possible to optimise the management of radio-electric resources in the cellular networks used in VANET network scenarios by simultaneously allocating the same RB (Resource Block) to a V-UE and a C-UE in order to optimise the efficiency of radio-electric resources, dynamically managing the efficient coexistence of C-UE and V-UE communications.

The invention presented here falls within the radio-communications industry and more specifically the area of cellular communications applied to cooperative vehicular systems.

### BACKGROUND TO THE INVENTION

In the architecture of LTE-A communications which forms the basis for the future 5G, what is known as the Evolved Node B (eNodeB) or base station is the element responsible for controlling and directing communications to and from the cellular user equipment (C-UE) in its area of coverage, allocating each one a set of resources or Resource Blocks (RBs). Each of these RBs has an associated transmission frequency and a period of time which will be used by each mobile terminal to communicate through the eNodeB with its destination terminal. In turn, the LTE-A standard allows device-to-device (D2D) communication which does not require resending of the information through the eNodeB.

Thus, device-to-device (D2D) communications means that nearby users can establish mobile communication without requiring the infrastructure to act as an intermediary, thus allowing the terminals to transmit at high speed, with low energy consumption, low communication delay and making better use of the radio-electric resources. Based on these capacities, works [1] and [2] analyse the possibility of applying D2D technology in the environment of vehicular ad-hoc networks (VANETs), and more specifically to satisfy the quality of service (QoS) requirements of the vehicle-to-vehicle (V2V) links.

Similar analyses have been carried out by 3GPP (3rd Generation Partnership Project), the community of telecommunications standard development organizations. In December 2015 a Work Item (WI) was approved whose main objective was to standardise V2V systems to operate over LTE [3]. The most significant features distinguishing pure D2D links and those used to provide support to V2V links lies in the speed of the Vehicle-User Equipment (V-UE), the density of V-UE in the area of coverage of a base station or eNodeB and the latency requirements in these links. For example, one of the WI's objectives with regard to V2V is the development of a solution capable of supporting relative speeds of up to 500 km/h, very different to those required in basic D2D links. This would inevitably entail changes in the structure of the physical layer.

Using cellular technology for V2V communications is a significant advance in VANET networks, especially in environments with high vehicle density and in which the technologies traditionally used do not ensure that all vehicles can transmit and receive critical messages from vehicles around them [4].

D2D communications can use unlicensed frequency bands but they normally make use of the same bands in the radio-electric spectrum as those used by users to communicate with the base station in LTE-A networks. This arrangement, known as "inband", may in turn be divided into two categories "underlay" and "overlay" [5]. In the case of underlay, D2D links reuse radio-electric resources (called Resource Blocks or RBs) allocated to cellular users. In the case of overlay, dedicated RBs are allocated to the D2D links. In terms of spectrum efficiency, therefore, underlay links are more beneficial than overlay links.

At the same time, D2D communications offer 4 types of gain, known as proximity gain, hop gain, reuse gain and pairing gain [1]. Proximity gain is a consequence of the proximity between the terminals performing D2D communication, and allows a high transmission rate and low energy consumption. Hop gain is due to the fact that in a D2D link only 2 communication channels are used instead of the 4 needed to establish a link between a User Equipment (UE) and the eNodeB or base station. Reuse gain is due to the fact that the D2D links use the same radio resources as cellular links, while pairing gain appears because a UE can select the mode of communication, either D2D or over the eNodeB. A three-step solution is described in [10] that offers an excellent introduction to the problem, taking into consideration D2D and C-UE links in the same area of coverage.

In the context described, numerous scientific developments have been made, yet few of them analyse the possibility of using the aforementioned features of D2D links in VANETs networks to provide V2V connectivity [1][2],[6]-[9], possibly due to the need to make a meticulous design of the radio-electric resource management to enable reuse of same to provide service to V2V links and C-UE users.

Focusing the study on the references cited in the previous paragraph, three main limitations of the currently existing arrangements for reusing cellular communications resources in the vehicle environment can be identified.

The first of these is related to the fact that in most of the proposed solutions the goal is to maximise the transmission rate of communications of C-UEs or V-UEs or the sum of the two [9][10]. However, although this solution is advantageous from the perspective of the C-UEs, in the vehicular environment most of the messages exchanged are small in size and have major restrictions in terms of latency and reliability. The main objective of the aforementioned solution is therefore not entirely adequate for vehicular environments since it does not take into account these two last features.

The second limitation lies in the excessive confidence given to the fact that the eNodeB is aware at all times of the properties of the radio channel (Channel State Information or CSI) of each cellular link and V2V in its area of coverage [8]; this is practically impossible due to the very nature of the VANET network, in which vehicles are in constant movement. A more reasonable approach is to consider that it has partial knowledge of the CSI, assuming variations in channel losses and zones with little or no coverage.

The final limitation that can be identified is based on the fact that none of the articles reviewed proposes a system for managing the radio-electric resources that enables periodic exchange of CAMs (Cooperative Awareness Messages) between the vehicles in a VANET network and between these and the infrastructure. It is said messages on which the functioning of these networks is based [5]-[9], [11]. Works [8] and [9] consider the operating requirements for exchange of these messages, but do not explain what strategy they apply for managing this information. For example, *Ren et al.* [8] propose a system for giving service to V2V links based on the cellular communications in which the transmission power depends on the requirements of the application, on some occasions maximising the sum rate and on others maximising the minimum transmission rate possible in each V2V link.

Summing up, although numerous developments have been made to resolve the management of D2D communications in cellular environments, due to the great mobility of the vehicles and the unpredictability of the topology of the VANETs, there are issues related to resource reallocation and sharing between cellular and vehicular users that have not been resolved and that therefore do not allow deployment of cooperative vehicle networks that use wireless cellular technologies for all their links. The invention proposed here therefore takes these limitations as its starting point and makes the contributions and claims described in the following sections of this document.

The following documents are related with the state of the art of the present invention:
- WO2016034198 which discloses a radio resource management method for Device-to- Device (D2D) communication in a wireless network, and to a base station for performing this method.
- WO2015143170 which exemplarily discloses the calculation of D2D link values.

The object of the present invention is therefore to overcome the aforementioned drawbacks of the current state of the technology related to lack of adaptation of the objective of maximising the transmission rate, excessive confidence in the eNodeB (base station)'s knowledge of the properties of the radio channel and the fact that the alternatives analysed in the state of the technology lack a system for managing radio-electric resources that will allow periodic exchange of CAM messages, by developing a procedure for managing radio-electric resources in 5G cellular networks for reuse of resources in V2V vehicle-to-vehicle resources.

The bibliographic references of the articles cited are as followed:
[1] X. Cheng, L. Yang, and X. Shen, "D2D for intelligent transportation systems: A feasibility study," IEEE Transactions on Intelligent Transportation Systems, vol. 16, no. 4, pp. 1784-1793, Aug 2015.
[2] A. Khelil and D. Soldani, "On the suitability of device-to-device communications for road traffic safety," in Internet of Things (WF-IoT), 2014 IEEE World Forum on, March 2014, pp. 224-229.
[3] 3GPP, "RP-152293 support for V2V services based on LTE sidelink, 3GPP TSG RAN meeting 70, Sitges, Spain, December 710, 2015," 2015.
[4] S. Eichler, "Performance Evaluation of the IEEE 802.11p WAVE Communication Standard," 2007 IEEE 66th Vehicular Technology Conference, Baltimore, MD, 2007, pp. 2199-2203.
[5] A. Asadi, Q. Wang, and V. Mancuso, "A survey on device-to-device communication in cellular networks," IEEE Communications Surveys Tutorials, vol. 16, no. 4, pp. 1801-1819, Fourthquarter 2014
[6] M. Botsov, M. Klgel, W. Kellerer, and P. Fertl, "Location dependent resource allocation for mobile device-to-device communications," in 2014 IEEE Wireless Communications and Networking Conference (WCNC), April 2014, pp. 1679-1684.
[7] W. Xing, N. Wang, C. Wang, F. Liu, and Y. Ji, "Resource allocation schemes for D2D communication used in VANETs," in 2014 IEEE 80th Vehicular Technology Conference (VTC2014-Fall), Sept 2014, pp. 1-6.
[8] Y. Ren, F. Liu, Z. Liu, C. Wang, and Y. Ji, "Power control in D2D-based vehicular communication networks," IEEE Transactions on Vehicular Technology, vol. 64, no. 12, pp. 5547-5562, Dec 2015.
[9] W. Sun, E. Strom, F. Brannstrom, K. Sou, and Y. Sui, "Radio resource management for D2D-based V2V communication," IEEE Transactions on Vehicular Technology, vol. PP, no. 99, pp. 1-1, 2015.
[10] D. Feng, L. Lu, Y. Yuan-Wu, G. Y. Li, G. Feng, and S. Li, "Device-to device communications underlaying cellular networks," IEEE Transactions on Communications, vol. 61, no. 8, pp. 3541-3551, August 2013
[11] Y. Ren, C. Wang, D. Liu, F. Liu, and E. Liu, "Applying LTE-D2D to support V2V communication using local geographic knowledge," in Vehicular Technology Conference (VTC Fall), 2015 IEEE 82nd, Sept 2015, pp. 1-5.

### DESCRIPTION OF THE INVENTION

The object of the present invention is a procedure for the management of radio-electric resources in 5G cellular networks for the reuse of radio-electric resources in V2V vehicle-to-vehicle links

The invention proposed adapts the previous characteristics provided by the LTE-A standard (Release 14), and the capacity of terminals that use this technology to create D2D links so as to allow the communications equipment used in the vehicles (V-UEs) to be able to create links between vehicles (V2V), reusing the resources allocated by the eNodeB or base station to the C-UEs registered in their area of coverage of a 5G network. In this way, the eNodeB, despite being responsible for allocating the resources to each of the network nodes (be they C-UEs or V-UEs), is not involved in communication between the vehicles (V-UEs) once the resources have been allocated.

For this purpose the invention presented firstly considers the distance between the mobile users (C-UE to eNodeB link) and the possible V2V pairs (V-UE to V-UE) in order to determine the transmission powers in each of these links, creating immediately thereafter the pairs of C-UEs and V-UEs that can share resources without causing interference between them, thus ensuring at all times the quality of service required by each user type considered, i.e. C-UEs and V-UEs.

A base station or eNodeB gives coverage to an area in which there are n C-UE cellular users and in which there are also m vehicular users fitted with V-UE cellular communications equipment. The procedure of the invention makes it possible to create V2V links by reusing the resources used by the C-UEs to communicate with the eNodeB, without interference between them and guaranteeing the quality of service that each user requires, providing the SINR (Signal-to-Interference-plus-Noise Ratio) value required to establish this communication.

The functioning of the invention is based on the fact that the C-UEs and V-UEs use the same radio-electric resources for their communications. For this purpose it has been decided to use an approach that uses the UpLink (UL) resources to improve the common underuse of the UL spectrum. Moreover, reallocation of UL resources for V2V links facilitates interference management, since said interference only affects the eNodeB and the devices in neighbouring cells, for which reason it generates less interference in the cell itself than if DownLink (DL) resources were used.

The proposed system comprises three principal components:
- The users,
- The scenario and
- The network systems, whose properties vary depending on several factors.

There are two types of user:
1) C-UEs, who are the common cellular users and
2) V-UEs, which are the vehicles that establish V2V links.
These users move through the scenario and have access to the network resources. These network resources, known as Resource Blocks (RBs), are allocated to the users, to enable them to transmit their information. The quantity of RBs allocated to a user depends on the type of message to be transmitted, with more RBs being allocated when more information needs to be transmitted.

In addition, V-UEs are organised in clusters. However, the definition and management of the clusters is not covered in this invention since there are a large number of methods that can be used to group the V-UEs on the basis of common characteristics (direction, distance and relative speed,). The invention proposed here also considers the possibility of the existence of individual V-UEs, i.e., vehicles that do not form part of a cluster but which must also have the capacity to communicate with the eNodeB and to which resources used by C-UEs managed by the same eNodeB could be allocated. A V-UE will not be included in a cluster when it does not fulfil the minimum requirements for this purpose (distance to the other members of the vehicle, relative speed).

Within the cluster, communications between cluster members (CMs) are coordinated by a central vehicle or Cluster Head (CH). It is therefore to the CH to whom the eNodeB or base station will indicate which RBs previously allocated to a C-UE may be reused within the cluster to enable communications between V-UEs, and therefore habilitate V2V links.

The RBs can only be reallocated to the V2V links if it can be guaranteed that there will be no interference in the communications between the C-UE to eNodeB link and the V2V links. A V2V link will therefore only be able to reuse the resources allocated by the eNodeB to a C-UE for its communications when the SINR between the two links is above a given threshold.

As well as considering the radio-electric interference between the links for the reallocation of RBs, the proposed invention takes into account that, depending on the information that each of the nodes in the network (C-UEs or V-UEs) is seeking to transmit, transmission power must be allocated to each one that will at least guarantee that the quality of service required by the application is met. To do this, the transmission power in each link will be defined on the basis of the minimum distance between the C-UE and the V2V link that will share its resources and the properties of the communications channel.

Once it has been determined which possible C-UE V-UE pairs can share the same RB because the distances between them exceeds the minimum distance that satisfies the minimum values of SINR, the transmission powers of each of the links (C-UE to eNodeB link and V2V link) are calculated, and the algorithm is executed that will make it possible to optimise management of the resources by seeking to maximise the number of C-UE and V-UE pairs, thus enabling the efficiency of the radio-electric resources in the area of coverage of the eNodeB to be increased.

Unless otherwise indicated, all technical and scientific elements used in this specification have the meaning habitually understood by a person skilled in the art to which this invention pertains. In the practice of the present invention, similar or equivalent procedures and materials to those described in the specification may be used.

Throughout the description and the claims the word "contains", "comprises" and any variations thereon shall not be intended to exclude other technical characteristics, additives, components or steps. For experts in the field, other objects, advantages and characteristics of the invention will emerge partly from the description and partly from practice with the invention.

### DESCRIPTION OF FIGURES

To complete the description made herein and in order better to aid understanding of the characteristics of the invention, according to a preferential example of a practical embodiment thereof, this description is accompanied by a set of drawings showing as follows in indicative, but not limitative terms.

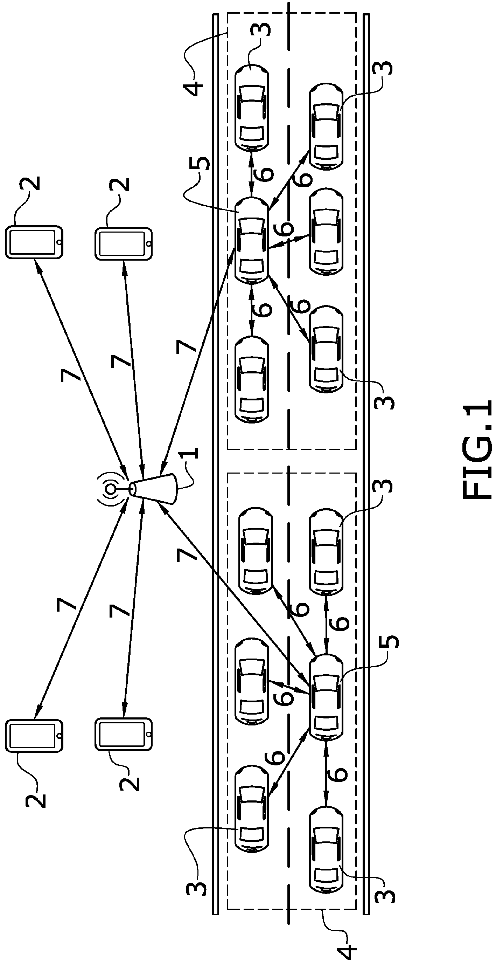

Figure 1, shows a general schematic representation of a possible scenario to which the procedure that forms the object of the invention is applied.

### PREFERRED EMBODIMENT OF THE INVENTION

According to the figures one preferred embodiment of the proposed invention is described below.

Figure 1 shows the (eNodeB) or base station (1) which is the element responsible for controlling and directing communications to and from the cellular user equipments (C-UEs) (2) in its area of coverage, allocating each one a set of resources or Resource Blocks (RBs), by means of links (7) within an LTE-A architecture. Each of these RBs has an associated transmission frequency and a period of time which will be used by each C-UE mobile terminal (2) to communicate through the eNodeB or base station (1) with its destination terminal. In turn, the LTE-A standard allows device-to-device (D2D) communication which does not require resending of the information through the eNodeB.

One can also see various V-UEs vehicles (3) grouped in a common area or cluster (4) based on common characteristics (direction, distance and relative speed). Within each cluster (4) there is a central vehicle or Cluster Head (CH) (5) which is responsible for coordinating the communications between the cluster members, i.e. the V-UE vehicles (3).

The central vehicle or Cluster Head (CH) (5) of each cluster (4) also establishes a communication with the eNodeB or base station (1) by means of an LTE-A standard link.

The procedure of optimising the radio-electric resources is based on reuse of these resources in 5G cellular networks in which vehicle-a-vehicle (V2V) links co-exist with cellular users or C-UEs (2) and requires at least one eNodeB or base station (1) responsible for controlling and directing communications to and from the cellular user equipment (C-UEs) (2) by means of links within an LTE-A architecture (7), and V-UE vehicles (3). Said optimisation procedure comprises the following stages:
- Grouping of the V-UEs (3) in clusters (4) based on common characteristics (direction, distance and relative speed)
- Election for each cluster (4) of a central vehicle or Cluster Head (CH) (5) responsible for coordinating communications between the cluster members (V-UEs (3))
- Allocation of resources by the eNodeB or base station (1) to each user for it to transmit its information.
- Calculation of the minimum distances required between C-UEs (2) and V2V links to make it possible to reuse radio-electric resources in the two links while ensuring that a Signal-to-Interference plus Noise ratio, SINR, of the C-Ues and V2V links is above the minimum threshold.
- Calculation of transmission powers of the links (7) between C-UEs (2) and the eNodeB or base station (1) and of the V2V links (6) based on the previously-calculated distance information
- Calculation of the value of the V2V links depending on the type of message that needs to be transmitted.
- Application of metaheuristic algorithm that enables an efficient solution to be obtained for the allocation and reuse of radio-electric resources

The calculation of the transmission powers of the links between (7) C-UEs (2) and the eNodeB or base station (1) and the V2V links (6) according to the information each of the nodes in the network (C-UEs or V-UEs) seeks to transmit makes it possible to reuse the radio-electric resources while guaranteeing the quality of service required by the user.

At the same time, execution of the algorithm that allows resource management to be optimised by seeking to maximise the number of C-UE and V-UE pairs, enables reallocation of RBs by increasing the radio-electric performance of the LTE-A network in the area of coverage of the eNodeB or base station (1).

As a result of the procedure that forms the object of the invention interference between the channels used by cellular users (C-UEs) (2) and vehicular users (V-UEs) (3) is reduced, ensuring quality of service depending on the ITS (Intelligent Transportation System) application to be executed.

Moreover, thanks to the procedure presented, it is possible to minimise the number of radio resources used to give service to C-UEs (2) and V-UEs (3), at the same time maximising the efficiency of the Resource Blocks (RB) used. These calculations thus make it possible to maximise the volume of information to be transmitted by the set of C-UEs and satisfy the quality-of-service requirements of the applications executed by the V-UEs in the coverage area of an eNodeB.

Having sufficiently described the nature of the present invention, and the means of implementing it, it is noted that within the same essence, it may be made in other embodiments differing in detail from that indicated herein as an example, and to which the protection obtained shall equally extend, provided that it does not alter, change or modify its basic principles, and falls within the scope of the appended claim.

## Claims

1. Procedure for the management of radio-electric resources in 5G cellular networks for the reuse of resources in vehicle-to-vehicle, V2V, links in cellular networks containing cellular users, C-UEs (2), at least one eNodeB or base station (1) responsible for controlling and directing communications to and from the cellular user equipment, C-UEs (2) by means of links within an LTE-A architecture (7), and V-UE vehicles (3), comprising the following stages:
- Grouping of the V-UEs (3) in clusters (4) based on common characteristics comprising direction, distance and relative speed;
- Election for each cluster (4) of a central vehicle or Cluster Head, CH (5) responsible for coordinating communications between the cluster members, V-UEs (3);
- Calculation of the minimum distances required between C-UEs (2) and V2V links to make it possible to reuse radio-electric resources in the two links while ensuring that a Signal-to-Interference plus Noise ratio, SINR , of the C-Ues and the V2V links is above a minimum threshold within the area of coverage of an eNodeB or base station, and creation of C-UE and V-UE to V-UE link pairs, when a pair distance between the CUE and the V-UEs allows to share radio-electric resources;
- Calculation, for each created pair, of transmission powers of the links (7) between C-UEs (2) and the eNodeB or base station (1) and of the V2V links (6) based on the previously-calculated pair distance information according to the information that each seeks to transmit, , wherein the quantity of radio-electric resources of the V2V links depends on the type of message that needs to be transmitted;
- Application of metaheuristics that enable an efficient solution to be obtained for the allocation and reuse of radio-electric resources wherein the number of created pairs is maximised, and the amount of used radio-electric resources within the area of coverage of an eNodeB or base station is minimised.

## Patentansprüche

1. Verfahren für die Verwaltung radioelektrischer Ressourcen in 5G-Mobilfunknetzen zur Wiederverwendung von Ressourcen in Fahrzeug-zu-Fahrzeug-Verbindungen (Vehicle-to-Vehicle/V2V) in Mobilfunknetzen, die Mobilfunknutzer, C-UEs (2), enthalten, mindestens eine eNodeB- oder Basisstation (1), die für die Steuerung und Leitung der Kommunikation zu und von der Mobilfunknutzerausrüstung, C-UEs (2), verantwortlich ist, mittels Verbindungen innerhalb einer LTE-A-Architektur (7), und V-UE-Fahrzeuge (3), umfassend die folgenden Stufen:
- Gruppierung der V-UEs (3) in Cluster (4) auf der Grundlage gemeinsamer Merkmale, die Richtung, Abstand und relative Geschwindigkeit umfassen;
- Für jeden Cluster (4) Wahl eines zentralen Fahrzeugs oder Cluster-Kopfes, CH (5), der für die Koordination der Kommunikation zwischen den Cluster-Mitgliedern, V-UEs (3), verantwortlich ist;
- Berechnung der Mindestabstände, die zwischen C-UEs (2) und V2V-Verbindungen erforderlich sind, um die Wiederverwendung der radioelektrischen Ressourcen in den beiden Verbindungen zu ermöglichen und gleichzeitig sicherzustellen, dass das Signal zu Störung plus Rauschen-Verhältnis (Signal-to-Interference plus Noise Ratio/SINR) der C-UEs und V2V-Verbindungen innerhalb des Abdeckungsbereichs einer eNodeB- oder Basisstation über einem Mindestschwellenwert liegt, und Schaffung von C-UE- und V-UE-zu-V-UE-Verbindungspaaren, wenn ein Paarabstand zwischen dem C-UE und den V-UE die gemeinsame Nutzung der radioelektrischen Ressourcen ermöglicht;
- Für jedes erzeugte Paar Berechnung der Sendeleistungen der Verbindungen (7) zwischen C-UEs (2) und der eNodeB- oder Basisstation (1) und der V2V-Verbindungen (6) auf der Grundlage der zuvor berechneten Paarabstandsinformationen entsprechend der Informationen, die jede zu übertragen versucht, wobei die Menge der radioelektrischen Ressourcen der V2V-Verbindungen von der Art der zu übertragenden Nachricht abhängt;
- Anwendung von Metaheuristiken, die es ermöglichen, eine effiziente Lösung für die Zuweisung und Wiederverwendung von radioelektrischen Ressourcen zu erzielen, bei der die Anzahl der erzeugten Paare maximiert und die Menge der verwendeten radioelektrischen Ressourcen innerhalb des Abdeckungsbereichs einer eNodeB- oder Basisstation minimiert wird.

## Revendications

1. Procédure de gestion des ressources radioélectriques dans les réseaux cellulaires 5G S pour la réutilisation des ressources dans les liaisons de véhicule à véhicule, V2V,dans les réseaux cellulairescontenant des utilisateurs cellulaires C-UE (2), au moins un eNodeB ou unestation de base (1) responsable du contrôle et de la direction des communications vers et depuis l'équipement de l'utilisateur cellulaire, C-UEau moyen de liaisons au sein d'une architecture LTE-A (7)et de véhicules V-UE (3), comprenant les étapes suivantes :
- Regroupement des V-UE (3) en groupes (4) sur la base de caractéristiques communes comprenant la direction, la distance et la vitesse relative ;
- Choix pour chaque groupe (4) d'un véhicule central ou d'un chef de groupe, CH(5) responsable de la coordination des communications entre les membres du groupe, V-UE (3) ;
- Calcul des distances minimales requises entre les liaisons C-UE (2) et V2V pour permettre la réutilisation des ressources radioélectriques dans les deux liaisons tout en garantissant qu'un rapport signal/brouillage plus bruit, SINR des liaisons C-UE et V2V est supérieur à un seuil minimum dans la zone de couverture d'un eNodeB ou d'une station de base, et création de liaisons C-UE et V-UE à V-UE, lorsqu'une distance de paire entre le CUE et les VUE permet de partager les ressources radioélectriques ;
- Calcul, pour chaque paire créée, des puissances de transmission des liaisons (7) entre les C-UE (2) et le eNodeB ou la station de base (1) et des liaisons V2V (6) sur la base des informations de distance de la paire précédemment calculéesen fonction des informations que chacune cherche à transmettre, la quantité de ressources radioélectriques des liaisons V2V dépendant du type de message à transmettre,
- Application de la métaheuristique permettant d'obtenir une solution efficace pour l'allocation et la réutilisation des ressources radioélectriques dans laquellele nombre de paires créées est maximisé, et la quantité de ressourcesradioélectriques dans la zone de couverture d'un eNodeB ou d'une station de base sont réduites au minimum.
